# EUROPEAN PATENT APPLICATION

(11) **EP 3 321 764 A1**
(43) Date of publication of application: **16.05.2018**
(21) Application number: 17201788.1
(22) Date of filing: 15.11.2017
(51) Int. Cl.: G06F 1/04

(54) **CLOCK FREQUENCY DETECTION METHOD AND APPARATUS**

(30) Priority: 15.11.2016 CN 201611024608
(71) Applicant: HUAWEI TECHNOLOGIES CO., LTD., Guangdong 518129 (CN)
(72) Inventor: SU, Qi, Shenzhen, Guangdong 518129 (CN); LU, Jiayin, Shenzhen, Guangdong 518129 (CN); LIU, Yu, Shenzhen, Guangdong 518129 (CN)
(74) Representative: Körber, Martin Hans

(57) **Abstract**

Embodiments of the present invention disclose a clock frequency detection method and apparatus. The method includes: dividing a known internal clock frequency range of the system into n frequency intervals, where each frequency interval is corresponding to a frequency detection module, and n is an integer greater than or equal to 2; obtaining a current internal clock frequency of the system, and using the current internal clock frequency as a reference clock frequency; selecting a frequency detection module corresponding to a frequency interval according to the reference clock frequency; and detecting, by the selected frequency detection module, a to-be-detected clock according to a frequency offset range of the reference clock frequency. By using the present invention, a risk that an internal clock of the system is attacked may be reduced, and system security may be improved.

## Description

### TECHNICAL FIELD

The present invention relates to the field of computer technologies, and in particular, to a clock frequency detection method and apparatus.

### BACKGROUND

In a computer system, a clock frequency is important in ensuring proper operating of a system. Therefore, a clock of the system needs to be protected, so as to prevent the clock from being attacked and changed. Currently, a method for implementing a clock security protection of the system may generally use a digital circuit protection solution. A main core of the solution is generally to use an external precision clock of the system. For example, a crystal oscillator or a phase-locked loop (PLL) frequency-locked clock is used as a reference clock to monitor a to-be-detected clock. Specifically, during monitoring, a precision clock such as the crystal oscillator or the PLL frequency-locked clock is used in real time to perform counting on a to-be-detected clock domain and perform statistics collection and determining within a period, so as to monitor and protect the to-be-detected clock.

However, if the external precision clock of the system is selected as the reference clock for detection, because the external precision clock may be easily attacked and changed, system security is relatively poor.

### SUMMARY

Embodiments of the present invention provide a clock frequency detection method and apparatus, so as to improve system security.

A first aspect of the present invention provides a clock frequency detection method, including:
dividing a known internal clock frequency range of a system into n frequency intervals, where each frequency interval is corresponding to a frequency detection module, and n is an integer greater than or equal to 2;
obtaining a current internal clock frequency of the system, and using the current internal clock frequency as a reference clock frequency;
selecting a frequency detection module corresponding to a frequency interval according to the reference clock frequency; and
detecting, by the selected frequency detection module, a to-be-detected clock according to a frequency offset range of the reference clock frequency.

An internal clock of the system is used as a reference clock. Compared with a possibility of being attacked when an external clock of the system is used, it is more difficult to attack the internal clock of the system, so that overall system security can be greatly improved. In addition, when the internal clock of the system is used as the reference clock, the internal clock frequency of the system may be divided into intervals according to the clock frequency detection precision requirement, and then a frequency detection module corresponding to a frequency interval is selected according to the current internal clock frequency of the system to detect the clock frequency, so that both system security and precision of clock frequency detection are ensured.

In a possible implementation, a value of n is in positive correlation with a clock frequency detection precision requirement.

When relatively high detection precision is required, a larger value of n may be selected; or when relatively low detection precision is required, a smaller value of n may be selected. Therefore, the clock frequency detection can be more flexible and more adaptable.

In a possible implementation, the obtaining a current internal clock frequency of the system, and using the current internal clock frequency as a reference clock frequency includes:
measuring the current internal clock frequency of the system, and using the current internal clock frequency as the reference clock frequency; or
reading clock frequency data stored in an internal memory of the system, and using the clock frequency data as the reference clock frequency, where the clock frequency data is obtained by measuring the internal clock frequency of the system by an external frequency recorder, and is stored in the internal memory of the system in a hardware overwriting manner.

By means of internal measuring the current internal clock frequency, and using the current internal clock frequency as the reference clock frequency, system security can be improved. The external frequency recorder measures the current internal clock frequency of the system, and then stores a measurement result in the internal memory of the system in a hardware overwriting manner, so that the system can directly call the stored data when performing frequency detection, and both security and efficiency are relatively high.

In a possible implementation, the detecting a to-be-detected clock according to a frequency offset range of the reference clock frequency includes:
performing high frequency detection on the to-be-detected clock; performing, by using a reference clock, sampling and counting on a clock obtained after frequency division is performed on the to-be-detected clock, so as to obtain a first statistical value; performing, by using the reference clock, sampling and counting on a clock obtained after frequency division is performed on a normal clock, so as to obtain a second statistical value; and comparing the first statistical value with the second statistical value, where if the first statistical value is greater than the second statistical value, it indicates that a high frequency of the to-be-detected clock is abnormal; and
performing low frequency detection on the to-be-detected clock; performing, by using the to-be-detected clock, sampling and counting on a clock obtained after frequency division is performed on the reference clock, so as to obtain a third statistical value; performing, by using the to-be-detected clock, sampling and counting on a clock obtained after frequency division is performed on the normal clock, so as to obtain a fourth statistical value; and comparing the third statistical value with the fourth statistical value, where if the third statistical value is greater than the fourth statistical value, it indicates that a low frequency of the to-be-detected clock is abnormal.

The high frequency detection and the low frequency detection ensure that the clock frequency is comprehensively and accurately detected.

In a possible implementation, the method further includes:
outputting a clock frequency detection result of the to-be-detected clock.

When detection is complete, the result may be output to a controller, a user may be instructed to perform subsequent processing. This helps protect system security; and when a clock is abnormal, the system may be suspended, and timely system maintenance may be performed.

A second aspect of the present invention provides a clock frequency detection apparatus, including:
an interval division module, configured to divide a known internal clock frequency range of a system into n frequency intervals, where each frequency interval is corresponding to a frequency detection module, and n is an integer greater than or equal to 2;
a reference obtaining module, configured to measure a current internal clock frequency of the system, and use the current internal clock frequency as a reference clock frequency;
an interval selection module, configured to select a frequency detection module corresponding to a frequency interval according to the reference clock frequency; and
n frequency detection modules, where the frequency detection module is configured to: when being selected, detect a to-be-detected clock according to a frequency offset range of the reference clock frequency.

In a possible implementation, a value of n is in positive correlation with a clock frequency detection precision requirement.

In a possible implementation, the reference obtaining module is specifically configured to:
measure the current internal clock frequency of the system, and use the current internal clock frequency as the reference clock frequency; or
read clock frequency data stored in an internal memory of the system, and use the clock frequency data as the reference clock frequency, where the clock frequency data is obtained by measuring the internal clock frequency of the system by an external frequency recorder, and is stored in the internal memory of the system in a hardware overwriting manner.

In a possible implementation, the frequency detection module is specifically configured to:
perform high frequency detection on the to-be-detected clock; perform, by using a reference clock, sampling and counting on a clock obtained after frequency division is performed on the to-be-detected clock, so as to obtain a first statistical value; perform, by using the reference clock, sampling and counting on a clock obtained after frequency division is performed on a normal clock, so as to obtain a second statistical value; and compare the first statistical value with the second statistical value, where if the first statistical value is greater than the second statistical value, it indicates that a high frequency of the to-be-detected clock is abnormal; and
perform low frequency detection on the to-be-detected clock; perform, by using the to-be-detected clock, sampling and counting on a clock obtained after frequency division is performed on the reference clock, so as to obtain a third statistical value; perform, by using the to-be-detected clock, sampling and counting on a clock obtained after frequency division is performed on the normal clock, so as to obtain a fourth statistical value; and compare the third statistical value with the fourth statistical value, where if the third statistical value is greater than the fourth statistical value, it indicates that a low frequency of the to-be-detected clock is abnormal.

In a possible implementation, the frequency detection module is further configured to output a clock frequency detection result of the to-be-detected clock.

A third aspect of the present invention provides an apparatus, including:
a processor, a memory, an interface circuit, and a bus, where the processor, the memory, and the interface circuit are connected by using the bus, the interface circuit is used by the apparatus to communicate with another device and transmit data, the memory is configured to store a set of program code, and the processor is configured to call the program code stored in the memory to perform the following operations:
   dividing a known internal clock frequency range of a system into n frequency intervals, where each frequency interval is corresponding to a frequency detection module, and n is an integer greater than or equal to 2;
   obtaining a current internal clock frequency of the system, and using the current internal clock frequency as a reference clock frequency;
   selecting a frequency detection module corresponding to a frequency interval according to the reference clock frequency; and
   detecting, by the selected frequency detection module, a to-be-detected clock according to a frequency offset range of the reference clock frequency.

In a possible implementation, a value of n is in positive correlation with a clock frequency detection precision requirement.

In a possible implementation, the processor is specifically configured to:
measure the current internal clock frequency of the system, and use the current internal clock frequency as the reference clock frequency; or
read clock frequency data stored in an internal memory of the system, and use the clock frequency data as the reference clock frequency, where the clock frequency data is obtained by measuring the internal clock frequency of the system by an external frequency recorder, and is stored in the internal memory of the system in a hardware overwriting manner.

In a possible implementation, the processor is specifically configured to:
perform high frequency detection on the to-be-detected clock; perform, by using a reference clock, sampling and counting on a clock obtained after frequency division is performed on the to-be-detected clock, so as to obtain a first statistical value; perform, by using the reference clock, sampling and counting on a clock obtained after frequency division is performed on a normal clock, so as to obtain a second statistical value; and compare the first statistical value with the second statistical value, where if the first statistical value is greater than the second statistical value, it indicates that a high frequency of the to-be-detected clock is abnormal; and
perform low frequency detection on the to-be-detected clock; perform, by using the to-be-detected clock, sampling and counting on a clock obtained after frequency division is performed on the reference clock, so as to obtain a third statistical value; perform, by using the to-be-detected clock, sampling and counting on a clock obtained after frequency division is performed on the normal clock, so as to obtain a fourth statistical value; and compare the third statistical value with the fourth statistical value, where if the third statistical value is greater than the fourth statistical value, it indicates that a low frequency of the to-be-detected clock is abnormal.

In a possible implementation, the processor is further configured to output a clock frequency detection result of the to-be-detected clock by using the interface circuit.

A fourth aspect of an embodiment of the present invention provides a computer storage medium, where the computer storage medium includes a set of program code, and is used to execute the method described in any implementation of the first aspect of the present invention.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic diagram of a system architecture applied to an embodiment of the present invention;
FIG. 2 is a schematic flowchart of a clock frequency detection method according to a first embodiment of the present invention;
FIG. 3 is a schematic flowchart of a clock frequency detection method according to a second embodiment of the present invention;
FIG. 4 is a schematic diagram of composition of a clock frequency detection apparatus according to a first embodiment of the present invention; and
FIG. 5 is a schematic diagram of composition of a clock frequency detection apparatus according to a second embodiment of the present invention.

### DESCRIPTION OF EMBODIMENTS

The following clearly describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

In the specification, claims, and accompanying drawings of the present invention, the terms "first", "second", "third", and so on are intended to distinguish between different objects but do not indicate a particular order. Moreover, "including", "including", or any other variant thereof, are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

In an application scenario in the embodiments of the present invention, a clock frequency detection apparatus may be separately disposed, or may be integrated into various systems whose operations need to depend on a clock. The apparatus may exist as a separate chip, such as a field-programmable gate array (Field-Programmable Gate Array, FPGA) or an integrated circuit (Application Specific Integrated Circuit, ASIC); or may be integrated into a processing chip of a system as a clock security protection module of the processing chip. This is not limited in the embodiments of the present invention.

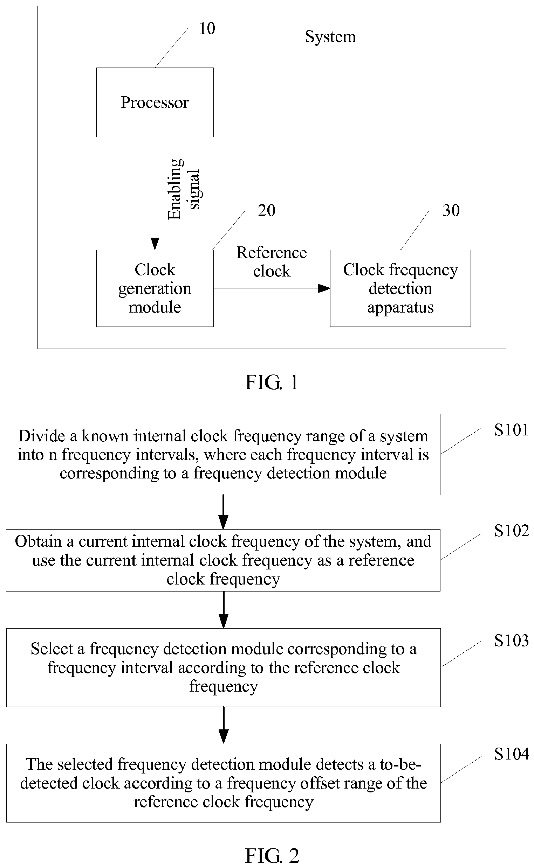

An internal clock of a system is a clock whose clock source is generated inside the system. Referring to FIG. 1, FIG. 1 is a schematic diagram of a system architecture applied to an embodiment of the present invention. The system architecture may include a processor 10, a clock generation module 20, and a clock frequency detection apparatus 30. The clock generation module 20 is integrated into a system (this may be implemented by using an analog circuit). The processor 10 in the system may enable the clock generation module 20 and perform internal parameter control on the clock generation module 20. The clock generation module 20 outputs periodic high and low levels, which can be considered as clock signals. However, because of design precision of the clock generation module 20 and process and manufacturing deviations of an analog component of the clock generation module 20, there is a frequency offset in an actually generated clock signal. In an early stage of actual product production, a maximum clock offset value (fₘᵢₙ, fₘₐₓ) of the clock signal may be obtained by means of analog simulation and process evaluation, and used as a frequency range of a reference clock for performing frequency detection.

In this embodiment of the present invention, a clock generated inside the system is used as the reference clock for performing clock frequency detection to protect a system clock. That is, compared with a conventional solution, the reference clock of the frequency detection module is generated by an internal clock generation module, and is not an external clock of the system. If an external reference clock of the system is used, the external clock may be easily attacked, and this increases a security risk of an entire system. However, it is relatively difficult to attack the internal clock of the system.

The following describes in detail a clock frequency detection method of the present invention with reference to specific embodiments.

Referring to FIG. 2, FIG. 2 is a schematic flowchart of a clock frequency detection method according to a first embodiment of the present invention. The method includes the following steps.

S101. Divide a known internal clock frequency range of a system into n frequency intervals, where each frequency interval is corresponding to a frequency detection module.

n is an integer greater than or equal to 2.

Because there are multiple manners of generating an internal clock of the system, and some cannot provide a clock whose quality is as good as that of a clock generated according to a standard PLL, if a clock whose quality is not good is directly used as a reference for frequency detection, high precision detection cannot be achieved. Therefore, in this embodiment of the present invention, precision of clock frequency detection may be greatly improved by dividing the internal clock frequency range of the system into frequency intervals.

For example, if the known internal clock frequency range of the system is (fₘᵢₙ, fₘₐₓ), the known internal clock frequency range may be divided into n frequency intervals: (fₘᵢₙ, f₁), (f₁, f₂), (f₂, f₃), ..., (fₙ₋₂, fₙ₋₁), and (fₙ₋₁, fₘₐₓ).

Optionally, a quantity of frequency intervals after the division may be determined according to a clock frequency detection precision requirement.

Optionally, a value of n is in positive correlation with the clock frequency detection precision requirement.

That is, a higher clock frequency detection precision requirement indicates a larger value of n, and the known internal clock frequency range of the system may be divided into a larger quantity of frequency intervals; a lower clock frequency detection precision requirement indicates a smaller value of n, and the known internal clock frequency range of the system may be divided into a smaller quantity of frequency intervals.

The precision requirement is determined according to an operating requirement of the system. For example, in this embodiment of the present invention, because secure and proper operation of the system needs to be ensured, there is a requirement for precision of a frequency of a system clock. If the clock is excessively fast, an error occurs in a system circuit sequence, and an operating result is abnormal; if the clock is excessively slow, an operating speed of the system is reduced.

Therefore, the precision requirement is determined according to a frequency range in which the clock of the system can properly operate. For example, an operating clock of the system is designed to be 100 MHz, if the system can properly operate within a frequency offset range of 10% (±10% of the frequency operating clock, that is, from 90 MHz to 110 MHz), the clock frequency detection precision requirement of the system may be relatively high; or if the system can properly operate within a frequency offset range of 30%, the clock frequency detection precision requirement of the system may be relatively low.

A value of n may be determined according to the requirement for precision of the to-be-detected clock of the system. For example, if the precision requirement is ±10%, and an actual detection error for each frequency detection module is ±2%, theoretically, an offset range of a corresponding reference clock cannot be greater than ±8%. If a larger quantity of frequency intervals are obtained by means of division, an offset range of the reference clock (far less than ±8%) is narrower, and actual detection precision is higher than required detection precision (basically equal to ±2%).

It should be noted that, a larger quantity of frequency intervals obtained by means of division indicates higher precision of clock frequency detection. When the clock frequency detection precision requirement is relatively low, n may also be equal to 1, that is, the known internal clock of the system may be directly used as a reference clock used to perform clock frequency detection on a to-be-detected clock.

S102. Obtain a current internal clock frequency of the system, and use the current internal clock frequency as a reference clock frequency.

S103. Select a frequency detection module corresponding to a frequency interval according to the reference clock frequency.

Specifically, after the reference clock frequency is determined, the frequency interval in which the reference clock frequency falls may be determined according to a specific value or frequency offset range of the reference clock frequency, a corresponding frequency detection module is selected according to the determined frequency interval, and an enabling signal is transmitted to activate the corresponding frequency detection module.

S104. The selected frequency detection module detects a to-be-detected clock according to a frequency offset range of the reference clock frequency.

An overall detection error of frequency detection is caused by a frequency offset of the reference clock and an error of a detection circuit in the frequency detection module.

In this embodiment, each frequency interval is corresponding to one frequency detection module. The frequency detection module has a detection error (a circuit error), the error cannot be eliminated, and a value of the error is fixed. Therefore, final detection precision depends on an input offset of the reference clock frequency. A larger quantity of frequency intervals obtained by means of division indicates a lower allowed offset of the reference clock frequency in each interval. Therefore, the precision is higher when a frequency detection module corresponding to a frequency interval is selected to perform clock frequency detection.

Optionally, during detection, high frequency detection and low frequency detection may be separately performed on the to-be-detected clock, so as to ensure that whether the to-be-detected clock properly operates. When there is an abnormality during detection, a host and a user may be informed of the abnormality, so that the user can perform subsequent maintenance and processing. This ensures system security and reduces unnecessary losses.

According to the clock frequency detection method in this embodiment of the present invention, an internal clock of the system is used as a reference clock. Compared with a possibility of being attacked when an external clock of the system is used, it is more difficult to attack the internal clock of the system, so that overall system security can be greatly improved. In addition, when the internal clock of the system is used as the reference clock, the internal clock frequency of the system may be divided into intervals according to the clock frequency detection precision requirement, and then a frequency detection module corresponding to a frequency interval is selected according to the current internal clock frequency of the system to detect the clock frequency, so that both system security and precision of clock frequency detection are ensured.

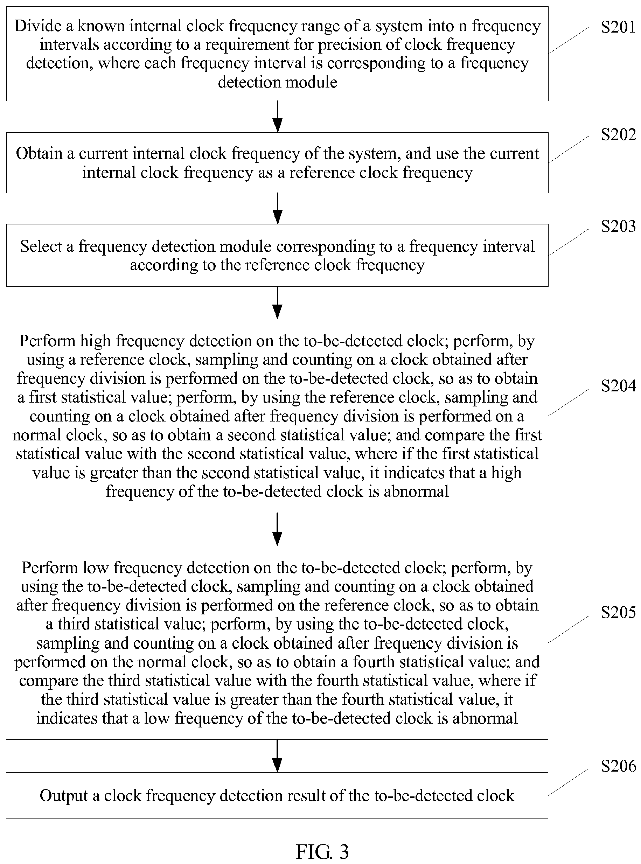

Referring to FIG. 3, FIG. 3 is a schematic flowchart of a clock frequency detection method according to a second embodiment of the present invention. In this embodiment, the method specifically includes the following steps.

S201. Divide a known internal clock frequency range of a system into n frequency intervals according to a clock frequency detection precision requirement, where each frequency interval is corresponding to a frequency detection module.

n is an integer greater than or equal to 2.

S202. Obtain a current internal clock frequency of the system, and use the current internal clock frequency as a reference clock frequency.

Optionally, when the current internal clock frequency of the system is obtained, a clock frequency detection apparatus may measure the current internal clock frequency of the system, and use the current internal clock frequency as the reference clock frequency; or
the clock frequency detection apparatus may read clock frequency data stored in an internal memory of the system, and use the clock frequency data as the reference clock frequency.

The clock frequency data may be obtained by measuring the current internal clock frequency of the system by an external frequency recorder or another frequency measuring device, and then stored in the internal memory of the system in hardware overwriting manner, such as data burn or system configuration.

By means of measuring the current internal clock frequency, and using the current internal clock frequency as the reference clock frequency, system security can be improved. The external frequency recorder measures the current internal clock frequency of the system, and then stores a measurement result in the internal memory of the system in a hardware overwriting manner, so that the system can directly call the stored data when performing frequency detection, and both security and efficiency are relatively high.

S203. Select a frequency detection module corresponding to a frequency interval according to the reference clock frequency.

S204. Perform high frequency detection on the to-be-detected clock; perform, by using a reference clock, sampling and counting on a clock obtained after frequency division is performed on the to-be-detected clock, so as to obtain a first statistical value; perform, by using the reference clock, sampling and counting on a clock obtained after frequency division is performed on a normal clock, so as to obtain a second statistical value; and compare the first statistical value with the second statistical value, where if the first statistical value is greater than the second statistical value, it indicates that a high frequency of the to-be-detected clock is abnormal.

The normal clock is a clock required for proper operation of the system, and the normal clock may be determined during initial operating configuration of the system. When sampling and counting are performed, if the first statistical value is less than or equal to the second statistical value, it may be considered that the high frequency of the to-be-detected clock is normal. Because the sampling and counting are periodically and continuously performed, if the first statistical value obtained by means of sampling and counting within one period increases continuously until the second statistical value is exceeded, in this case, it may be considered that the high frequency of the to-be-detected clock is abnormal.

S205. Perform low frequency detection on the to-be-detected clock; perform, by using the to-be-detected clock, sampling and counting on a clock obtained after frequency division is performed on the reference clock, so as to obtain a third statistical value; perform, by using the to-be-detected clock, sampling and counting on a clock obtained after frequency division is performed on the normal clock, so as to obtain a fourth statistical value; and compare the third statistical value with the fourth statistical value, where if the third statistical value is greater than the fourth statistical value, it indicates that a low frequency of the to-be-detected clock is abnormal.

A key difference between a principle of low frequency detection and that of high frequency detection lies in a difference of a frequency division object and a subject and an object that are used for performing sampling and counting. Except that, the principle of low frequency detection is similar to that of high frequency detection, and details are not described herein again.

S206. Output a clock frequency detection result of the to-be-detected clock.

According to the clock frequency detection method in this embodiment of the present invention, detailed steps of obtaining the current internal clock frequency of the system and detecting the to-be-detected clock are specifically described, so that it is implemented that a clock frequency of the to-be-detected clock is detected based on the internal clock of the system, and system security is ensured.

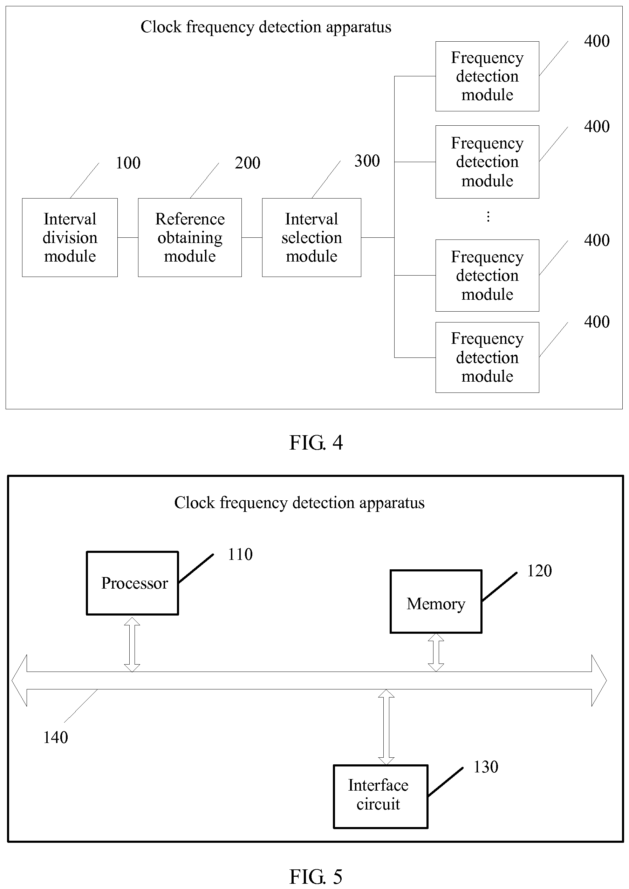

Referring to FIG. 4, FIG. 4 is a schematic diagram of composition of a clock frequency detection apparatus according to a first embodiment of the present invention. The apparatus in this embodiment of the present invention includes:
an interval division module 100, configured to divide a known internal clock frequency range of a system into n frequency intervals, where each frequency interval is corresponding to a frequency detection module, and n is an integer greater than or equal to 2;
a reference obtaining module 200, configured to measure a current internal clock frequency of the system, and use the current internal clock frequency as a reference clock frequency;
an interval selection module 300, configured to select a frequency detection module corresponding to a frequency interval according to the reference clock frequency; and
n frequency detection modules 400, configured to: when being selected, detect a to-be-detected clock according to a frequency offset range of the reference clock frequency.

Optionally, the interval division module 100 may be a memory that may store information about interval division, such as a value of n and a specific range of each frequency interval. When an interval needs to be selected, information stored in the memory may be directly read to determine a frequency interval in which the reference clock frequency falls, so as to determine a frequency detection module that needs to be selected.

Optionally, a value of n is in positive correlation with the clock frequency detection precision requirement.

Optionally, the reference obtaining module 200 is specifically configured to:
measure the current internal clock frequency of the system, and use the current internal clock frequency as the reference clock frequency; or
read clock frequency data stored in an internal memory of the system, and use the clock frequency data as the reference clock frequency, where the clock frequency data is obtained by measuring the internal clock frequency of the system by an external frequency recorder, and is stored in the internal memory of the system in a hardware overwriting manner.

Optionally, the frequency detection module 400 is specifically configured to:
perform high frequency detection on the to-be-detected clock; perform, by using a reference clock, sampling and counting on a clock obtained after frequency division is performed on the to-be-detected clock, so as to obtain a first statistical value; perform, by using the reference clock, sampling and counting on a clock obtained after frequency division is performed on a normal clock, so as to obtain a second statistical value; and compare the first statistical value with the second statistical value, where if the first statistical value is greater than the second statistical value, it indicates that a high frequency of the to-be-detected clock is abnormal; and
perform low frequency detection on the to-be-detected clock; perform, by using the to-be-detected clock, sampling and counting on a clock obtained after frequency division is performed on the reference clock, so as to obtain a third statistical value; perform, by using the to-be-detected clock, sampling and counting on a clock obtained after frequency division is performed on the normal clock, so as to obtain a fourth statistical value; and compare the third statistical value with the fourth statistical value, where if the third statistical value is greater than the fourth statistical value, it indicates that a low frequency of the to-be-detected clock is abnormal.

Optionally, the frequency detection module 400 is further configured to output a clock frequency detection result of the to-be-detected clock.

It should be noted that the foregoing interval division module 100, reference obtaining module 200, interval selection module 300, and frequency detection module 400 may separately exist, or may be integrated. In addition, the interval division module 100, the reference obtaining module 200, the interval selection module 300, or the frequency detection module 400 in the foregoing clock frequency detection apparatus embodiment may be separated from a processor of the apparatus in a hardware manner, and may be disposed in a microprocessor manner; or may be built into a processor of the apparatus in a hardware manner; or may be stored in the memory of the apparatus in a software manner, so that they can be called by the processor of the apparatus to perform operations corresponding to the interval division module 100, the reference obtaining module 200, the interval selection module 300, and the frequency detection module 400.

For example, in the first embodiment (an embodiment shown in FIG. 4) of the clock frequency detection apparatus in the present invention, the interval selection module 300 may be the processor of the apparatus; and functions of the interval division module 100, the reference obtaining module 200, and the frequency detection module 400 may be built into the processor, may be separated from the processor, or may be stored in the memory in a software manner, so that they can be called by the processor to implement their functions. The foregoing processor may be a central processing unit (CPU), a microprocessor, a single-chip microcomputer, or the like.

Referring to FIG. 5, FIG. 5 is a schematic diagram of composition of a clock frequency detection apparatus according to a second embodiment of the present invention. The apparatus includes:
a processor 110, a memory 120, an interface circuit 130, and a bus 140, where the processor 110, the memory 120, and the interface circuit 130 are connected by using the bus 140, the interface circuit 130 is used by the apparatus to communicate with another device and transmit data, the memory 120 is configured to store a set of program code, and the processor 110 is configured to call the program code stored in the memory 120 to perform the following operations:
dividing a known internal clock frequency range of a system into n frequency intervals, where each frequency interval is corresponding to a frequency detection module, and n is an integer greater than or equal to 2;
obtaining a current internal clock frequency of the system, and using the current internal clock frequency as a reference clock frequency;
selecting a frequency detection module corresponding to a frequency interval according to the reference clock frequency; and
detecting, by the selected frequency detection module, a to-be-detected clock according to a frequency offset range of the reference clock frequency.

Optionally, a value of n is in positive correlation with the clock frequency detection precision requirement.

Optionally, the processor 110 is specifically configured to:
measure the current internal clock frequency of the system, and use the current internal clock frequency as the reference clock frequency; or
read clock frequency data stored in an internal memory of the system, and use the clock frequency data as the reference clock frequency, where the clock frequency data is obtained by measuring the internal clock frequency of the system by an external frequency recorder, and is stored in the internal memory of the system in a hardware overwriting manner.

Optionally, the processor 110 is specifically configured to:
perform high frequency detection on the to-be-detected clock; perform, by using a reference clock, sampling and counting on a clock obtained after frequency division is performed on the to-be-detected clock, so as to obtain a first statistical value; perform, by using the reference clock, sampling and counting on a clock obtained after frequency division is performed on a normal clock, so as to obtain a second statistical value; and compare the first statistical value with the second statistical value, where if the first statistical value is greater than the second statistical value, it indicates that a high frequency of the to-be-detected clock is abnormal; and
perform low frequency detection on the to-be-detected clock; perform, by using the to-be-detected clock, sampling and counting on a clock obtained after frequency division is performed on the reference clock, so as to obtain a third statistical value; perform, by using the to-be-detected clock, sampling and counting on a clock obtained after frequency division is performed on the normal clock, so as to obtain a fourth statistical value; and compare the third statistical value with the fourth statistical value, where if the third statistical value is greater than the fourth statistical value, it indicates that a low frequency of the to-be-detected clock is abnormal.

Optionally, the processor 110 is further configured to output a clock frequency detection result of the to-be-detected clock by using the interface circuit.

The clock frequency detection apparatus described in this embodiment may be configured to implement some or all procedures in the method embodiments described in the present invention with reference to FIG. 1 and FIG. 2, and execute some or all functions in the apparatus embodiment described in the present invention with reference to FIG. 3.

A person of ordinary skill in the art may understand that, each aspect of the present invention or a possible implementation of each aspect may be specifically implemented as a system, a method, or a computer program product. In addition, each aspect of the present invention or the possible implementation of each aspect may take a form of a computer program product, where the computer program product refers to computer-readable program code stored in a computer-readable medium.

The computer-readable medium may be a computer-readable data medium or a computer-readable storage medium. The computer-readable storage medium includes but is not limited to an electronic, magnetic, optical, electromagnetic, infrared, or semi-conductive system, device, or apparatus, or any appropriate combination thereof, such as a random access memory (RAM), a read-only memory (ROM), an erasable programmable read only memory (EPROM or flash memory), an optical fiber, and a compact disc read only memory (CD-ROM).

A processor in a computer reads computer-readable program code stored in a computer-readable medium, so that the processor can perform a function and an action specified in each step or a combination of steps in a flowchart; an apparatus is generated to implement a function and an action specified in each block or a combination of blocks in a block diagram.

All computer-readable program code may be executed on a user computer, or some may be executed on a user computer as a standalone software package, or some may be executed on a local computer of a user while some is executed on a remote computer, or all the code may be executed on a remote computer or a server. It should also be noted that, in some alternative implementation solutions, each step in the flowcharts or functions specified in each block in the block diagrams may not occur in the illustrated order. For example, two consecutive steps or two blocks in the illustration, which are dependent on a called function, actually may be executed substantially at the same time, or these blocks may sometimes be executed in reverse order.

Obviously, a person skilled in the art can make various modifications and variations to the present invention without departing from the scope of the present invention. The present invention is intended to cover these modifications and variations provided that they fall within the scope of protection defined by the following claims and their equivalent technologies.

## Claims

1. A clock frequency detection method, comprising:
dividing a known internal clock frequency range of a system into n frequency intervals, wherein each frequency interval is corresponding to a frequency detection module, and n is an integer greater than or equal to 2;
obtaining a current internal clock frequency of the system, and using the current internal clock frequency as a reference clock frequency;
selecting a frequency detection module corresponding to a frequency interval according to the reference clock frequency; and
detecting, by the selected frequency detection module, a to-be-detected clock according to a frequency offset range of the reference clock frequency.

2. The method according to claim 1, wherein a value of n is in positive correlation with a clock frequency detection precision requirement.

3. The method according to claim 1, wherein the obtaining a current internal clock frequency of the system, and using the current internal clock frequency as a reference clock frequency comprises:
measuring the current internal clock frequency of the system, and using the current internal clock frequency as the reference clock frequency; or
reading clock frequency data stored in an internal memory of the system, and using the clock frequency data as the reference clock frequency, wherein the clock frequency data is obtained by measuring the internal clock frequency of the system by an external frequency recorder, and is stored in the internal memory of the system in a hardware overwriting manner.

4. The method according to claim 1, wherein the detecting a to-be-detected clock according to a frequency offset range of the reference clock frequency comprises:
performing high frequency detection on the to-be-detected clock; performing, by using a reference clock, sampling and counting on a clock obtained after frequency division is performed on the to-be-detected clock, so as to obtain a first statistical value; performing, by using the reference clock, sampling and counting on a clock obtained after frequency division is performed on a normal clock, so as to obtain a second statistical value; and comparing the first statistical value with the second statistical value, wherein if the first statistical value is greater than the second statistical value, it indicates that a high frequency of the to-be-detected clock is abnormal; and
performing low frequency detection on the to-be-detected clock; performing, by using the to-be-detected clock, sampling and counting on a clock obtained after frequency division is performed on the reference clock, so as to obtain a third statistical value; performing, by using the to-be-detected clock, sampling and counting on a clock obtained after frequency division is performed on the normal clock, so as to obtain a fourth statistical value; and comparing the third statistical value with the fourth statistical value, wherein if the third statistical value is greater than the fourth statistical value, it indicates that a low frequency of the to-be-detected clock is abnormal.

5. The method according to any one of claims 1 to 4, further comprising:
outputting a clock frequency detection result of the to-be-detected clock.

6. A clock frequency detection apparatus, comprising:
an interval division module, configured to divide a known internal clock frequency range of a system into n frequency intervals, wherein each frequency interval is corresponding to a frequency detection module, and n is an integer greater than or equal to 2;
a reference obtaining module, configured to obtain a current internal clock frequency of the system, and use the current internal clock frequency as a reference clock frequency;
an interval selection module, configured to select a frequency detection module corresponding to a frequency interval according to the reference clock frequency; and
n frequency detection modules, wherein the frequency detection module is configured to: when being selected, detect a to-be-detected clock according to a frequency offset range of the reference clock frequency.

7. The apparatus according to claim 6, wherein a value of n is in positive correlation with a clock frequency detection precision requirement.

8. The apparatus according to claim 6, wherein the reference obtaining module is specifically configured to:
measure the current internal clock frequency of the system, and use the current internal clock frequency as the reference clock frequency; or
read clock frequency data stored in an internal memory of the system, and use the clock frequency data as the reference clock frequency, wherein the clock frequency data is obtained by measuring the internal clock frequency of the system by an external frequency recorder, and is stored in the internal memory of the system in a hardware overwriting manner.

9. The apparatus according to claim 6, wherein the frequency detection module is specifically configured to:
perform high frequency detection on the to-be-detected clock; perform, by using a reference clock, sampling and counting on a clock obtained after frequency division is performed on the to-be-detected clock, so as to obtain a first statistical value; perform, by using the reference clock, sampling and counting on a clock obtained after frequency division is performed on a normal clock, so as to obtain a second statistical value; and compare the first statistical value with the second statistical value, wherein if the first statistical value is greater than the second statistical value, it indicates that a high frequency of the to-be-detected clock is abnormal; and
perform low frequency detection on the to-be-detected clock; perform, by using the to-be-detected clock, sampling and counting on a clock obtained after frequency division is performed on the reference clock, so as to obtain a third statistical value; perform, by using the to-be-detected clock, sampling and counting on a clock obtained after frequency division is performed on the normal clock, so as to obtain a fourth statistical value; and compare the third statistical value with the fourth statistical value, wherein if the third statistical value is greater than the fourth statistical value, it indicates that a low frequency of the to-be-detected clock is abnormal.

10. The apparatus according to any one of claims 6 to 9, wherein the frequency detection module is further configured to output a clock frequency detection result of the to-be-detected clock.
